# EUROPÄISCHE PATENTSCHRIFT

(11) **EP 3 894 463 B1**
(45) Veröffentlichungstag und Bekanntmachung des Hinweises auf die Patenterteilung: **20.04.2022**
(21) Anmeldenummer: 18819078.9
(22) Anmeldetag: 10.12.2018
(51) Int. Cl.: C08G 77/04, C08G 77/32

(54) **VERFAHREN ZUR HERSTELLUNG SPHÄRISCHER SILICONHARZPARTIKEL**
PROCESS FOR PREPARING SPHERICAL SILICONE RESIN PARTICLES
PROCÉDÉ POUR LA FABRICATION DE PARTICULES DE RÉSINE DE SILICONE SPHÉRIQUES

(43) Veröffentlichungstag der Anmeldung: 20.10.2021
(73) Patentinhaber: Wacker Chemie AG, 81737 München (DE)
(72) Erfinder: KNÖR, Sebastian, 84547 Emmerting (DE); KRÖNER, Sebastian, 84489 Burghausen (DE)
(74) Vertreter: Fritz, Helmut
(86) Internationale Anmeldenummer: PCT/EP2018/084241
(87) Internationale Veröffentlichungsnummer: WO 2020/119887

(56) Entgegenhaltungen:
- WO-A1-2005/003218
- DE-A1-102007 010 544

## Beschreibung

Die Erfindung betrifft ein Verfahren zur Herstellung sphärischer Siliconharzpartikel, welche durch Ultraschallsiebung deagglomeriert werden.

Der Stand der Technik kennt verschiedene Verfahren zur Herstellung von sphärischen Polymethylsilsesquioxanpartikeln. JP3970449B2 beschreibt die Optimierung der Raum-Zeit-Ausbeute und der Kontrolle der Partikelgröße. Bei der Trocknung kommt es zu einer Verschmelzung der Partikel und den Aufbau einer Netzwerkstruktur.

Pulverförmige Produkte werden umständlich durch Trocknung und anschließende Mahlung erhalten. "Crushing" oder Mahlung mittels Strahlmühle ist notwendig zur Deagglomeration der bei der herkömmlichen Trocknung verschmelzenden Partikel. Mittels Sprühtrocknung, wie in WO18065058A1 beschrieben, lässt sich die aufwändige Mahlung vermeiden, führt jedoch nicht zu einer vollständigen Deagglomeration. Die Dokumente DE 10 2007 010544 und WO 2005/003218 offenbaren Verfahren, wobei Silsesquioxanpartikel durch Kondensation hergestellt werden und durch Ultraschallsiebung deagglomeriert werden.

Gegenstand der Erfindung ist ein Verfahren zur Herstellung sphärischer Siliconharzpartikel, bei dem Alkoxysilane mit Wasser zu einem Hydrolysat umgesetzt werden,
die entstandenen Siliconharzpartikel aus der Mischung isoliert werden,
die Siliconharzpartikel getrocknet werden und die Partikel durch Ultraschallsiebung deagglomeriert werden.

Mit einer Ultraschallsiebung wird eine vollständige Deagglomeration der sphärischen Siliconharzpartikel unter vergleichsweise geringem Aufwand erreicht.

Agglomerationsfreie sphärische Siliconharzpartikel werden nach dem Stand der Technik durch Trocknen und nachfolgende Mahlung, oder alternativ durch Sprühtrocknung erhalten. Das erfindungsgemäße Verfahren ist deutlich effektiver und kostengünstiger. Die Partikel können in kompakten technischen Trockenanlagen, z.B. Schaufeltrockner, wesentlich schneller und kostengünstiger getrocknet werden, als bei Sprühtrocknung. Gleichzeitig wird der aufwändige Schritt der Mahlung, welche bei solchen Trockenverfahren nach dem bisherigen Stand der Technik erforderlich ist, vermieden. Dabei wird die gewöhnliche Schutzsiebung des Produkts nach Trocknung, welche in industriellen Pulverproduktionen üblich ist, durch eine spezielle Ultraschallsiebung ersetzt. Ultraschallsiebung ist ein bekanntes Abreinigungsverfahren, um die Verstopfung und Blockierung von Siebgewebe durch Anhaftungen oder Steckkorn zu vermeiden und so konstante Flussraten und erhöhte Siebkapazitäten aufrecht zu erhalten. Völlig überraschend ist jedoch, dass der Energieeintrag des Ultraschallsiebs ausreicht, um vorhandene Agglomerate zu trennen, und eine vollständige Deagglomeration bei 99% Ausbeute zu erzielen. Technischer Mehraufwand nach dem Stand der Technik, wie z.B. Mahlung oder Sprühtrocknung, kann so vermieden werden.

Bei der Ultraschallsiebung wird ein Siebgewebe mit vorzugsweise 10 bis 40 µm, besonders bevorzugt 15 bis 25 µm, insbesondere 18 bis 22 µm Maschenweite eingesetzt. Dabei kann ein quasi vollständiger Siebdurchgang bei hohem spezifischem Massendurchsatz erzielt werden. Aus der Laborsiebung (RETSCH Wurfsiebmaschine AS 200 basic) sowie Siebversuchen auf normalen Vibrationssiebmaschinen ohne Überkornaustrag ist bekannt, dass ein Gutteil der nach dem nächsten Stand der Technik hergestellten Partikel in agglomerierter Form vorliegen und ein konventionell betriebenes Siebgewebe mit 20 µm Maschenweite nicht passieren, sondern auf diesem verbleiben. Dies ist nachteilig, da das verbleibende Überkorn entweder als Produktverlust vom Sieb abgezogen werden muss oder dieses durch sonstige Nachbearbeitungsschritte deagglomeriert werden muss. Passierhilfen wie Abstreifer oder Bürsten, welche über das Siebgewebe bewegt werden können, führen zu Abrieb bzw. Haarbruch und somit zu Produktkontaminationen.

Die Ultraschallsiebung erfolgt bevorzugt durch den Einsatz einer Ultraschallsonde an einem Siebrahmen, welcher die entsprechenden Schwingungen auf das Siebgewebe überträgt. Die Ultraschallsiebung erfolgt bevorzugt im Frequenzbereich von 30 bis 38 kHz besonders bevorzugt 33 bis 37 kHz, insbesondere 34,5 bis 35,5 kHz. Die Ultraschallsiebung erfolgt bevorzugt mit einer Schwingungsamplitude von 1 bis 100 µm, besonders bevorzugt von 1 bis 10 µm, insbesondere von 2 bis 5 µm. Die Ultraschallsiebung wird vorzugsweise mit einer flächenspezifischen Leistung von 10 bis 500 W/m² besonders bevorzugt 50 bis 300 W/m², insbesondere 100 bis 200 W/m² durchgeführt. Es lassen sich überraschend eine quasi vollständige Deagglomerierung der Partikel und somit ein quasi vollständiger Siebdurchgang erzielen. Dabei wird kein Grobgut abgezogen. Es findet keine Akkumulation von Grobgut auf dem Siebgewebe statt, sondern Agglomerate werden aufgebrochen und passieren vollständig das Siebgewebe.

Eine Frequenzvariation während des Betriebes ist bevorzugt. Die durch die Ultraschallanregung resultierende Wurfhöhe der Partikel auf dem Siebgewebe beträgt vorzugsweise 0,3 bis 10 cm, insbesondere 0,5 bis 3 cm.

Vorzugsweise werden bei der Ultraschallsiebung Klopfhilfen eingesetzt.

Bei der Ultraschallsiebung können spezifische Massendurchsätze von 100 bis 150 kg/(h·m²) erzielt werden.

Konventionell werden derartige Ultraschallsysteme durch Abreinigung von belegten bzw. verstopften Siebgeweben eingesetzt. Dies resultiert häufig auch in höheren spezifischen Massedurchsätzen, da ein größerer Teil der Siebfläche nutzbar bleibt als ohne Ultraschallabreinigung. Die vorliegende Erfindung unterscheidet sich in diesem Effekt jedoch, da sich ein 20 µm Sieb durch die Partikel nicht zusetzt. Die guten flächenspezifischen Massendurchsätze sind auf eine effiziente Deagglomerierung der Partikel zurückzuführen.

Die Alkoxysilane werden ausgewählt aus Mono-, Di-, Tri- und Tetraalkoxysilanen. Der Anteil der Trialkoxysilane beträgt mindestens 40 Mol-%, besonders bevorzugt mindestens 50 Mol-%, insbesondere mindestens 70 Mol-%. Vorzugsweise liegt der Gehalt an Tetraalkoxysilanen bei höchstens 10 Mol-%, bevorzugt höchstens 5 Mol-%, insbesondere höchstens 1 Mol-%. Der Gehalt an Dialkoxysilanen beträgt vorzugsweise höchstens 60 Mol-%, bevorzugt höchstens 50 Mol-%, insbesondere höchstens 30 Mol-%. In einem bevorzugten Verfahren werden durch Einsatz von Trialkoxysilanen Polysilsesquioxanpartikel hergestellt.

Bei der Umsetzung der Alkoxysilane mit Wasser zu einem Hydrolysat können gleiche oder unterschiedliche Alkoxysilane eingesetzt werden. Die Zugabe gleicher oder unterschiedlicher Alkoxysilane kann gleichzeitig oder zeitlich versetzt zu einem beliebigen Zeitpunkt vor der Isolierung der Partikel erfolgen.

Die Umsetzung der Alkoxysilane mit Wasser zu einem Hydrolysat kann im sauren, basischen oder neutralen Medium erfolgen.

Bevorzugt erfolgt die Umsetzung der Alkoxysilane mit angesäuertem Wasser.

Vorzugsweise wird das Hydrolysat in einer oder mehreren Portionen Base vermischt. Das Hydrolysat kann zur Base gegeben werden oder die Base kann zu dem Hydrolysat gegeben werden.

Vorzugsweise werden mindestens 20 Gew.-%, besonders bevorzugt mindestens 40 Gew.-%, insbesondere bevorzugt mindestens 70 Gew.-% der Alkoxysilane mindestens 5 Minuten, bevorzugt mindestens 10 Minuten, insbesondere mindestens 15 Minuten vor Zugabe einer Base zugegeben. Es können dadurch Siliconharzpartikel unterschiedlicher Größe, Härte und Elastizität oder mit funktionellen Gruppen an der Oberfläche oder mit Kern-Hülle Struktur hergestellt werden.

In einem bevorzugten Verfahren werden mindestens 80 Gew.-%, insbesondere mindestens 90 Gew.-% der Alkoxysilane mindestens 30 Minuten vor Zugabe der Base eingesetzt und vorzugsweise höchstens 20 Gew.-%, insbesondere höchstens 10 Gew.-% der Alkoxysilane mindestens 1 h, vorzugsweise mindestens 1,5, insbesondere mindestens 2 h nach Zugabe der Base zugesetzt. Insbesondere bevorzugt ist die Zugabe der Gesamtmenge an Alkoxysilane mindestens 30 Minuten vor Zugabe der Base.

Die Alkoxysilane tragen vorzugsweise C₁- bis C₄-Alkoxyreste, bevorzugt Ethoxyreste oder insbesondere Methoxyreste.

Neben den Alkoxyresten tragen die Alkoxysilane Kohlenwasserstoffreste mit 1 bis 16 Kohlenstoffatomen oder Reste R^{a} mit funktionellen Gruppen.

Die Kohlenwasserstoffreste haben vorzugsweise 1 bis 4 Kohlenstoffatome, insbesondere bevorzugt ist der Methylrest.

Beispiele für Reste R^{a} mit funktionellen Gruppen sind Glykolreste und Kohlenwasserstoffreste mit funktionellen organischen Gruppen ausgewählt aus der Gruppe der Phosphorsäureester, Phosphonsäureester, Epoxidfunktionen, Aminofunktionen, Methacrylatfunktionen, Carboxylfunktionen, Acrylatfunktionen, olefinisch oder acetylenisch ungesättigten Kohlenwasserstoffen.

Die jeweiligen funktionellen Gruppen können gegebenenfalls substituiert sein.

Die Reste R^{a} können gegebenenfalls hydroxy-, alkyloxy- oder trimethylsilylterminiert sein. In der Hauptkette können nicht benachbarte Kohlenstoffatome durch Sauerstoffatome ersetzt sein.

Die funktionellen Gruppen in R^{a}, liegen in der Regel nicht direkt am Siliziumatom gebunden vor. Eine Ausnahme hiervon bilden die olefinischen oder acetylenischen Gruppen, die auch direkt siliziumgebunden vorliegen können, vor allem die Vinylgruppe. Die übrigen funktionellen Gruppen in R^{a} sind über Spacergruppen an das Siliziumatom gebunden, wobei der Spacer stets Si-C-gebunden vorliegt. Der Spacer ist dabei ein zweiwertiger Kohlenwasserstoffrest, der 1 bis 30 Kohlenstoffatome umfasst und in dem nicht benachbarte Kohlenstoffatome durch Sauerstoffatome ersetzt sein können und der auch andere Heteroatome oder Heteroatomgruppen enthalten kann, wobei dies nicht bevorzugt ist.

Die bevorzugten funktionellen Gruppen Methacrylat, Acrylat und Epoxy sind vorzugsweise über einen Spacer an das Siliziumatom gebunden, wobei der Spacer aus 3 bis 15 Kohlenstoffatomen, vorzugsweise 3 bis 8 Kohlenstoffatomen, insbesondere 3 Kohlenstoffatomen und gegebenenfalls darüber hinaus höchstens ein bis 3 Sauerstoffatomen, vorzugsweise höchstens 1 Sauerstoffatom besteht.

Die ebenfalls bevorzugte Carboxylgruppe ist vorzugsweise über einen Spacer an das Siliziumatom gebunden, wobei der Spacer aus 3 bis 30 Kohlenstoffatomen, bevorzugt 3 bis 20 Kohlenstoffatomen, insbesondere 3 bis 15 Kohlenstoffatomen und gegebenenfalls darüber hinaus noch aus Heteroatomen, allerdings bevorzugt höchstens ein bis 3 Sauerstoffatomen, vorzugsweise höchstens 1 Sauerstoffatom, insbesondere keinem Sauerstoffatom besteht. Reste R^{a}, die Carboxylreste als funktionelle Gruppe tragen, werden durch die allgemeine Formel (VIII) beschrieben

Y¹ - COOH (VIII),

wobei Y¹ vorzugsweise einen zweiwertigen linearen oder verzweigten Kohlenwasserstoffrest bedeutet mit bis zu 30 Kohlenstoffatomen, wobei Y¹ auch olefinisch ungesättigte Gruppen oder Heteroatome enthalten kann und das vom Rest Y¹ unmittelbar an das Silizium gebundene Atom ein Kohlenstoff ist. Heteroatome enthaltende Fragmente, die in dem Rest Y¹ typischerweise enthalten sein können, sind -N(R⁵)-C(=O)-, -C-O-C-, -N(R⁵)-, -C(=O)-, -O-C(=O)-, -C-S-C-, -O-C(=O)-O-, -N(R⁵)-C(=O)-N(R⁵)-, wobei unsymmetrische Reste in beiden möglichen Richtungen in den Rest Y¹ eingebaut sein können, wobei R⁵ einen Kohlenwasserstoffrest oder Wasserstoff bedeutet.

Wird der Rest gemäß Formel (VIII) z.B. durch Ringöffnung und Kondensation eines Maleinsäureanhydrids an eine Silanolfunktion erzeugt, so würde er einen Rest der Form (cis)-C=C-COOH bedeuten.

Funktionelle Gruppen tragende Reste R^{a}, die Heteroatome enthalten, sind beispielsweise Carbonsäureesterreste, der allgemeinen Formel (IXa)

Y¹ - C(=O)O-Y² (IXa),

wobei Y¹ die oben angegebene Bedeutung hat bzw. in einer weiteren Ausführungsform in der Formel (IXa) gar nicht vorhanden ist. Der Rest Y² bedeutet ganz allgemein ein organischer Rest. Y² kann auch weitere Heteroatome und organische Funktionen enthalten wie Doppelbindungen oder Sauerstoffatome, wobei dies nicht bevorzugt ist. Bevorzugt sind als Y² Kohlenwasserstoffreste, wie beispielsweise Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie Tolylreste, Xylylreste und Ethylphenylreste, und Aralkylreste, wie der Benzylrest und der ß-Phenylethylrest. Besonders bevorzugte Kohlenwasserstoffreste Y² sind der Methyl, der n-Propyl, iso-Propyl-, der Phenyl-, der n-Octyl- und der iso-Octylrest.

R^{a} kann als funktionelle Gruppe auch einen umgekehrt gebundenen Carbonsäureesterrest tragen, also ein Rest der Form (IXb)

Y¹ - OC(=O)Y² sein (IXb)

wobei Y¹ und Y² dieselbe Bedeutung wie unter Formel (IXa) haben.

Funktionelle Gruppen tragende Reste R^{a} können auch Carbonsäureanhydridreste der allgemeinen Formeln (X) oder (XI) sein

Y¹ - C-C(=O)-O-C(=O) (X),

Y¹ - R¹⁴C-C(=O)-O-C(=0)R¹⁵ (XI),

wobei Y¹ die oben angegebene Bedeutung hat und R¹⁴ und R¹⁵ unabhängig voneinander jeweils einen C1 - C8 Kohlenwasserstoffrest bedeuten, der gegebenenfalls Heteroatome enthalten kann, wobei dies nicht bevorzugt ist.

Weitere Beispiele für funktionelle Gruppen tragende Reste R^{a} sind Phosphonsäurereste und Phosphonsäureesterreste der allgemeinen Formel (XII)

Y¹-P(=O)(OR¹⁶)₂ (XII),

wobei Y¹ die oben angegebene Bedeutung hat, die Reste R¹⁶ vorzugsweise unabhängig voneinander Wasserstoff- oder Kohlenwasserstoffreste bedeuten, mit bis zu 18 Kohlenstoffatomen. Bevorzugte Phosphonsäurereste sind solche, bei denen R¹⁶ Wasserstoff, Methyl oder Ethyl bedeutet, wobei diese Aufzählung nicht limitierend zu verstehen ist.

Beispiele für weitere funktionelle Gruppen tragende Reste R^{a} sind Acryloxy-, bzw. Methacryloxyreste der Methacrylsäureester oder Acrylsäureester wie Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Weitere Beispiele für funktionelle Gruppen tragende Reste R^{a} sind die bevorzugten olefinisch ungesättigten Kohlenwasserstoffreste R¹⁷ der Formel (XIII) und (XIV)

Y¹-CR⁷=CR⁸R⁹ (XIII)

Y¹-C≡CR¹⁰ (XIV),

wobei Y¹ die oben angegebene Bedeutung hat bzw. in einer weiteren Ausführungsform in den Formeln (XIII) und (XIV) gar nicht vorhanden ist, und die Reste R⁷, R⁸, R⁹ und R¹⁰ unabhängig voneinander ein Wasserstoffatom oder einen C1 - C8 Kohlenwasserstoffrest bedeuten, der gegebenenfalls Heteroatome enthalten kann, wobei das Wasserstoffatom der bevorzugteste Rest ist. Besonders bevorzugte Reste (XIII) sind der Vinylrest, der Propenylrest und der Butenylrest, insbesondere der Vinylrest. Der Rest (XIII) kann auch einen über einen Spacer gebundenen Dienylrest bedeuten, wie den über einen Spacer gebundenen 1,3 Butadienyl- oder den Isoprenylrest.

Weitere Beispiele für funktionelle Gruppen tragende Reste R^{a} sind solche mit Epoxy-Gruppen der Formeln (XV) und (XVI), 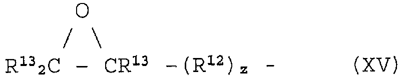 oder 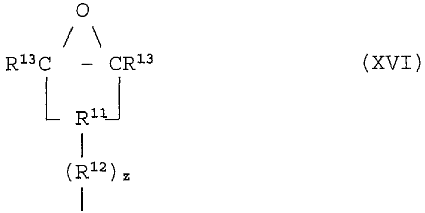 wobei
R¹² ein zweiwertiger Kohlenwasserstoffrest mit 1 bis 10 Kohlenstoffatomen je Rest ist, der durch ein
Ethersauerstoffatom unterbrochen sein kann,
R¹³ ein Wasserstoffatom oder ein einwertiger Kohlenwasserstoffrest mit 1 bis 10 Kohlenstoffatomen je Rest ist, der durch ein Ethersauerstoffatom unterbrochen sein kann,
R¹¹ einen dreiwertigen Kohlenwasserstoffrest mit 3 bis 12 Kohlenstoffatomen je Rest ist und
z 0 oder 1 ist.

Geeignete Beispiele für solche Epoxy-funktionellen Reste R^{a} sind
3-Glycidoxypropyl-,
3,4-Epoxycyclohexylethyl-,
2-(3,4-Epoxy-4-methylcyclohexyl)-2-methylethyl-,
3,4-Epoxybutyl-,
5,6 -Epoxyhexyl-,
7,8-Epoxydecyl-,
11,12-Epoxydodecyl- und
13,14-Epoxytetradecyl-rest.

Bevorzugte Epoxy-Reste R^{a} sind der 3-Glycidoxypropyl-Rest und der 3,4-Epoxycyclohexylethyl-Rest.

Weitere Beispiele für funktionelle Gruppen tragende Reste R^{a} sind solche mit Amino-Gruppen der allgemeinen Formel (XVIII)

-R²⁰-[NR²¹R²²]ₙNR²¹₂ (XVIII),

wobei R²⁰ ein zweiwertiger linearer oder verzweigter Kohlenwasserstoffrest mit 3 bis 18 Kohlenstoffatomen, vorzugsweise ein Alkylenrest mit 3 bis 10 Kohlenstoffatomen, bedeutet,
R²¹ ein Wasserstoffatom, einen Alkylrest mit 1 bis 8 Kohlenstoffatomen oder einen Acylrest, wie Acetylrest, bedeutet, vorzugsweise ein Wasserstoffatom ist,
R²² ein zweiwertiger Kohlenwasserstoffrest mit 1 bis 6 Kohlenstoffatomen, vorzugsweise ein Alkylenrest mit 1 bis 6 Kohlenstoffatomen, bedeutet,
n 0, 1, 2, 3 oder 4, vorzugsweise 0 oder 1 ist.

Bevorzugt ist ein Verfahren zur Herstellung sphärischer Polysilsesquioxanpartikel, bei dem in einem ersten Schritt Trialkoxysilane der allgemeinen Formel (I)

RSi(OR¹)₃ (I),

in der
**R** einen Kohlenwasserstoffrest mit 1 bis 16 Kohlenstoffatomen dessen Kohlenstoffkette durch nicht benachbarte Gruppen -O-unterbrochen sein kann,
**R¹** einen C₁- bis C₄-Alkylrest bedeuten,
mit angesäuertem Wasser mit einem pH-Wert von höchstens 6 unter Durchmischung zu einem Hydrolysat umgesetzt werden,
in einem zweiten Schritt das Hydrolysat mit einer Lösung einer Base in Wasser oder C₁- bis C₄-Alkanol vermischt wird,
in einem dritten Schritt die Mischung mindestens 2 h aufbewahrt wird,
in einem vierten Schritt die Polysilsesquioxanpartikel aus der Mischung isoliert werden,
in einem fünften Schritt die Polysilsesquioxanpartikel getrocknet werden und
in einem sechsten Schritt die Partikel durch Ultraschallsiebung deagglomeriert werden.

**R** bedeutet vorzugsweise einen Alkylrest mit 1 bis 6 Kohlenstoffatomen oder Phenylrest, insbesondere Ethyl-, Vinyl- oder Methylrest.

**R¹** bedeutet vorzugsweise einen Methyl-, Ethyl-, oder n-Propylrest, insbesondere einen Methylrest.

Bevorzugte Trialkoxysilane der allgemeinen Formel (I) sind Methyltrimethoxysilan, Methyltriethoxysilan, Methyltri-n-propoxysilan, Methyltriisopropoxysilan und Methyltris(2-methoxyethoxy)silan und Gemische davon.

Die Umsetzung zu einem Hydrolysat erfolgt vorzugsweise in angesäuertem Wasser mit einem pH-Wert von höchstens 5,5 besonders bevorzugt höchstens 4,5 und vorzugsweise mindestens 1, besonders bevorzugt mindestens 2, insbesondere mindestens 2,3.

Das eingesetzte Wasser ist vorzugsweise entsalzt und weist vor dem Ansäuern vorzugsweise eine Leitfähigkeit von höchstens 50 µS/cm, bevorzugt höchstens 30 µS/cm, besonders bevorzugt höchstens 20 µS/cm auf, insbesondere bevorzugt höchstens 10 µS/cm auf, jeweils gemessen bei 20°C.

Zum Ansäuern des eingesetzten Wassers können Brønstedt-Säuren oder Lewis-Säuren eingesetzt werden.

Beispiele für Lewis-Säuren sind BF₃, AlCl₃, TiCl₃, SnCl₄, SO₃, PCl₅, POCl₃, FeCl₃ und dessen Hydrate und ZnCl₂. Beispiele für Brønstedt-Säuren sind Salzsäure, Bromwasserstoffsäure, Schwefelsäure, Salpetersäure, salpetrige Säure, Chlorsulfonsäure, Phosphorsäuren, wie ortho-, meta- und Polyphosphorsäuren, Borsäure, selenige Säure, Salpetersäure, Carbonsäuren, wie Ameisensäure, Essigsäure, Propionsäure, Citronensäure und Oxalsäure, Halogenessigsäuren, wie Trichlor- und Trifluoressigsäure, p-Toluolsulfonsäure, saure Ionenaustauscher, saure Zeolithe und säureaktivierte Bleicherde.

Bevorzugt sind Salzsäure, Bromwasserstoffsäure und Essigsäure.

Je genauer der Ziel-pH-Wert eingestellt wird, desto geringer fällt die Streuung der mittleren Partikelgröße zwischen unterschiedlichen Reaktionsansätzen aus. Vorzugsweise ist die Abweichung des pH Werts kleiner +1, bevorzugt kleiner ±0,5, besonders bevorzugt kleiner ±0,3, insbesondere kleiner ±0,1.

Kinetikstudien mittels NMR haben gezeigt, dass die Geschwindigkeit der Hydrolyse der Trialkoxysilane der allgemeinen Formel (I) im sauren Milieu pH abhängig ist und umso schneller verläuft, je niedriger der pH-Wert ist. Die Geschwindigkeit der Kondensationsreaktion ist ebenfalls pH abhängig und nimmt bei niedrigem pH-Wert zu.

Das Ansäuern des Wassers kann vor der Umsetzung zum Hydrolysat gleichzeitig mit der Umsetzung erfolgen oder sowohl vor der Umsetzung als auch gleichzeitig mit der Umsetzung erfolgen.

Die Hydrolyse des Trialkoxysilans der allgemeinen Formel (I) ist eine schwach exotherme Reaktion. Die Temperatur im ersten Schritt wird in einer bevorzugten Ausführungsform gegebenenfalls durch Heizen oder Kühlen vorzugsweise bei 0°C bis 80°C, bevorzugt bei 10°C bis 50°C, besonders bevorzugt bei 15°C bis 40°C, ganz besonders bevorzugt bei 15 bis 30 °C, insbesondere bei 15 - 25 °C gehalten, wobei die Temperaturschwankung nach Erreichen der Zieltemperatur vorzugsweise weniger als 10 °C, bevorzugt weniger als 5 °C beträgt. Die Dosierung des Trialkoxysilans kann beliebig vor oder nach Erreichen der Zieltemperatur begonnen werden.

In einer anderen Ausführungsform wird das Trialkoxysilan in einer Portion zudosiert. Dabei wird die Wärme nicht aktiv oder nur teilweise herausgekühlt. In dieser Ausführungsform findet eine exotherme Zunahme der Temperatur nach Zugabe des Trialkoxysilans statt. Die Temperatur der Umsetzung im ersten Schritt beträgt 20 °C bis 80°C, vorzugsweise bis 60°C.

Vorzugsweise wird das Trialkoxysilan in 0,5 bis 5 h, besonders bevorzugt höchstens 2 h dosiert. Zwischen der schnellen Zugabe und der Dosierung gibt es einen fließenden Übergang an Ausführungsformen, d.h. es kann z.B. zügig in 15 min unter teilweiser Wärmeabführung bis maximal 40°C zugegeben werden, oder es kann z.B. über 2 h dosiert werden, dabei aber nur geringfügig gekühlt werden, wodurch man zunächst einen Temperaturanstieg auf 30°C zulässt und bei dieser Temperatur hält.

Besonders bevorzugt ist die Dosierung bei einer konstanten Temperatur.

Vorzugsweise werden im ersten Schritt auf 100 Gewichtsteile Wasser 5 bis 43 Gewichtsteile, vorzugsweise 11 bis 34 Gewichtsteile, insbesondere 13 bis 25 Gewichtsteile Trialkoxysilan eingesetzt.

Die Durchmischung im ersten Schritt kann durch einen statischen Mischer oder bevorzugt durch einen Rührer erfolgen.

Vorzugsweise wird in einem dem Schritt 1 folgenden Schritt 1a der pH-Wert des Hydrolysats auf einen Wert von 1 bis 6 eingestellt. Vorzugsweise wird im Schritt 1a zur Einstellung des pH-Werts des Hydrolysats eine Säure verwendet, welche auch im ersten Schritt eingesetzt werden kann, oder es wird eine Base verwendet, welche auch im zweiten Schritt eingesetzt werden kann.

Vorzugsweise wird nach Dosierung des Trialkoxysilans und gegebenenfalls Einstellung des pH-Werts im Schritt 1a für 5 min bis 5 h, besonders bevorzugt 10 min bis 3 h insbesondere 15 min bis 1,5 h nachgerührt. Die Nachrührzeit wird vorzugsweise so gewählt, dass die Summe der Zugabezeit des Silans und der Nachrührzeit 6 h nicht überschreiten.

Die Temperatur beim Nachrühren wird bei 0°C bis 60°C, bevorzugt bei 10°C bis 50°C, besonders bevorzugt bei 10°C bis 40°C, ganz besonders bevorzugt bei 10 bis 30 °C, insbesondere bei 15 bis 25 °C gehalten. Vorzugsweise ist die Differenz der Temperatur der Umsetzung im ersten Schritt und der Temperatur beim Nachrühren kleiner 20 °C, bevorzugt kleiner 10 °C, insbesondere kleiner 5 °C.

Vorzugsweise wird im zweiten Schritt die Base ausgewählt aus Alkalihydroxid, Erdalkalihydroxid, Alkalimethanolat, Ammoniak und organischen Aminen. Bevorzugte organische Amine sind Alkylamine, wie Mono-, Di- oder Triethylamin, Mono-, Di- oder Trimethylamin oder 1,2-Ethylendiamin. Bevorzugt werden die Hydroxide von Li, Na, K eingesetzt.

Vorzugsweise wird im zweiten Schritt eine Lösung von Alkalihydroxid in Wasser oder in einem Alkanol mit 1 bis 3 Kohlenstoffatomen eingesetzt. Bevorzugte Alkanole sind 1-Propanol, 2-Propanol, Ethanol und insbesondere Methanol. Eine Lösung von Alkalihydroxid in Wasser ist ebenfalls bevorzugt. Geeignet sind verdünnte oder konzentrierte Lösungen von Alkalihydroxid 0,001 bis 1100 g/l bei 20 °C, bevorzugt 0,01 bis 500 g/l, besonders bevorzugt 0,1 bis 500 g/l.

Vorzugsweise erfolgt die Einstellung des pH-Werts des Hydrolysats im zweiten Schritt bei der Temperatur, die das Hydrolysat nach dem ersten Schritt aufweist.

Vorzugsweise erfolgt die Einstellung des pH-Werts des Hydrolysats im zweiten Schritt unter Durchmischung. Dabei kann die Durchmischung durch einen statischen Mischer oder bevorzugt durch einen Rührer erfolgen.

Beim Einsatz einer Lösung von Alkalihydroxid in einem Alkanol mit 1 bis 3 Kohlenstoffatomen haften die Partikel besonders wenig aneinander, zeigen einen besonders niedrigen Agglomerationsgrad und neigen weniger zum Verklumpen. Die Partikel zeigen ein in kosmetischen Anwendungen bevorzugtes trockneres Hautgefühl. KOH ist als Alkalihydroxid bevorzugt.

Alternativ zu NaOH und KOH ist auch der Einsatz eines NaOH- oder KOH-Bildners möglich, der im zweiten Schritt mit dem im Hydrolysat vorhandenen Wasser sofort zu NaOH oder KOH reagiert. Beispiele dafür sind Natriumethanolat, Kaliummethanolat, NaH und KH. Bei dieser Ausführungsform ist der Einsatz von Natriumethanolat oder Kaliummethanolat in methanolischer Lösung bevorzugt.

Vorzugsweise wird so viel Lösung von Base zugegeben, dass ein pH Wert von mindestens 6, vorzugsweise mindestens 6,5 und höchstens 10, vorzugsweise höchstens 9,5 erreicht wird, jeweils direkt nach Zugabe der Base gemessen. Durch die Zugabe der Menge an Base kann die Partikelgröße beeinflusst werden, wobei niedrige pH Werte größere Partikel ergeben. Der insbesondere bevorzugte pH Wert beträgt 7,5 bis 9.

Die Lösung von Base wird vorzugsweise innerhalb von 10 Sekunden bis 10 Minuten, insbesondere innerhalb von 1 bis 3 Minuten zugegeben, vorzugsweise unter starkem und kurzem Rühren.

Die Temperatur der Zugabe von Base im zweiten Schritt wird in einer bevorzugten Ausführungsform vorzugsweise bei 0°C bis 60°C, bevorzugt bei 10°C bis 50°C, besonders bevorzugt 10°C bis 40°C, ganz besonders bevorzugt bei 10°C bis 30°C, insbesondere bei 15°C bis 25°C gehalten. Vorzugsweise ist die Differenz der Temperatur beim Nachrühren und der Temperatur Zugabe von Base kleiner 20 °C, bevorzugt kleiner 10 °C, insbesondere kleiner 5°C.

Fluides, also flüssigkeits-ähnliches Verhalten, zeigt sich insbesondere direkt nach dem Aufschütteln der Polysilsesquioxanpartikel. Das fluide Verhalten ist umso stärker ausgeprägt, umso stärker die Volumenzunahme ist. Ein Material, das 50% Volumenzunahme aufweist, zeigt bereits fluides Verhalten, was sich beispielsweise darin äußert, dass das Material im Gebinde - unmittelbar nach dem Aufschütteln - beim Schwenken des Gebindes ähnlich einer Flüssigkeit hin- und her fließt. Ein Material mit 50% Volumenzunahme sedimentiert sehr schnell und geht in den nicht-fluiden Ausgangszustand zurück, was nachteilig ist. Die sphärischen Polysilsesquioxanpartikel zeigen vorzugsweise mindestens 100% Volumenzunahme.

Die Durchmischung im zweiten Schritt kann durch einen statischen Mischer oder bevorzugt durch einen Rührer erfolgen.

Nach dem zweiten Schritt wird die Durchmischung vorzugsweise innerhalb von 10 Minuten, bevorzugt innerhalb von 5 Minuten beendet. Nach dem zweiten Schritt wird die Mischung vorzugsweise mindestens 1 h, bevorzugt mindestens 1,5 h, besonders bevorzugt mindestens 2,5 h nicht bewegt. Danach kann ein Rührer bei niedriger Drehzahl zugeschaltet werden, um ein Sedimentieren der Partikel zu verhindern. Dies ist optional und nicht notwendig, da sich die sedimentierten Polysilsesquioxanpartikel problemlos aufrühren lassen.

Nach dem zweiten Schritt wird die Temperatur der Mischung vorzugsweise mindestens 1 h, bevorzugt mindestens 1,5 h, besonders bevorzugt mindestens 2,5 h nicht mehr als 20 °C, bevorzugt nicht mehr als 10 °C verändert.

Wenn in der Anfangsphase im dritten Schritt, in welchem die Ausbildung der Partikel erfolgt, bewegt wird, treten vermehrt verformte, verwachsene oder agglomerierte Partikel auf.

In einer bevorzugten Ausführungsform wird die Mischung im dritten Schritt bis zur Isolierung der Polysilsesquioxanpartikel nicht bewegt.

Bevorzugt wird die Mischung im dritten Schritt mindestens 4 h, besonders bevorzugt mindestens 7 h, insbesondere mindestens 10 h aufbewahrt, bevor die Polysilsesquioxanpartikel isoliert werden. Auch Aufbewahrungszeiten bis 12 Wochen sind möglich.

Eine Trübung ist meist bereits nach 1 - 30 Minuten zu sehen.

Die Temperatur im dritten Schritt beträgt vorzugsweise 0°C bis 60°C, bevorzugt bei 10°C bis 50°C, besonders bevorzugt 10°C bis 40°C, ganz besonders bevorzugt 10°C bis 30°C, insbesondere 15°C bis 25°C. Bei niedrigen Temperaturen bilden sich größere Partikel, bei höheren Temperaturen bilden sich kleinere Partikel.

Bei einer Temperatur von 15°C bis 25°C besteht ein geringer oder kein Temperaturgradient der Reaktionsmischung zum Außenbereich, dadurch minimaler Wärmegradient zwischen Reaktorwandung und Reaktionslösung und dadurch minimierte thermische Konvektion während der Fällung der Partikel.

Das erfindungsgemäße Verfahren kann als Batchansatz, als Semi-Batch und oder als kontinuierlicher Prozess geführt werden.

Die Mischung wird in einer bevorzugten Ausführungsform nach dem dritten Schritt durch Zugabe einer Säure neutralisiert.

Die entstandenen Siliconharzpartikel werden aus der Mischung isoliert, im bevorzugten Verfahren im vierten Schritt, vorzugsweise durch Abfiltrieren oder Zentrifugieren.

Nach dem Isolieren werden die Partikel vorzugsweise mit VE-Wasser oder Alkohol gewaschen.

Die isolierten Siliconharzpartikel werden getrocknet, im bevorzugten Verfahren im fünften Schritt. Die Trocknung der Partikel erfolgt vorzugsweise bei 40 bis 250 °C, besonders bevorzugt bei 100 bis 240 °C, insbesondere bevorzugt bei 140 bis 220 °C. Die Trocknung kann unter Umgebungsdruck oder bei vermindertem Druck erfolgen. Während der Trocknung findet auch eine Kondensation freier Si-OH Gruppen statt, die laut Kinetikmessungen vorzugsweise ab 150 °C, besser ab 180 °C, ideal ab 200 °C abläuft. Partikel welche lange Zeit bei 100 °C getrocknet werden, sind zwar trocken, weisen aber einen hohen Si-OH Gehalt auf. Bei 150 °C ist der Si-OH Gehalt deutlich reduziert, aber noch nicht vollständig entfernt, bei 200 °C werden Si-OH Gruppen nochmals signifikant reduziert. Durch einen reduzierten Si-OH Gehalt ergeben sich Vorteile im Verteilungsverhalten und der Fluidisierung der Partikel.

Als Trockner eignen sich beispielsweise Schaufeltrockner, Wirbelschichttrockner, Hordentrockner, Stromtrockner oder Trommeltrockner.

Die Partikel werden vorzugsweise 0,5 bis 100 h, besonders bevorzugt 0,5 bis 24 h insbesondere 1 bis 14 h getrocknet.

Die getrockneten ungesiebten Siliconharzpartikel, insbesondere Polysilsesquioxanpartikel weisen vorzugsweise mindestens 30 Gew.-%, bevorzugt mindestens 40 Gew.-%, besonders bevorzugt mindestens 50 Gew.-%, einer Siebfraktion <20 µm auf.

Die getrockneten ungesiebten Siliconharzpartikel, insbesondere Polysilsesquioxanpartikel weisen vorzugsweise mindestens 60 Gew.-%, bevorzugt mindestens 70 Gew.-%, einer Siebfraktion <40 µm auf.

Die getrockneten ungesiebten Siliconharzpartikel, insbesondere Polysilsesquioxanpartikel weisen vorzugsweise weniger als 25 Gew.-%, bevorzugt weniger als 20 Gew.-%, besonders bevorzugt weniger als 15 Gew.-%,einer Siebfraktion >100 µm auf.

Die besonders hohe Agglomerisationsfreiheit der Siliconharzpartikel, insbesondere Polysilsesquioxanpartikel wird durch die vorstehend beschriebene Ultraschallsiebung erreicht.

Die Siliconharzpartikel, insbesondere Polysilsesquioxanpartikel zeigen bei der Untersuchung im Elektronenmikroskop vorzugsweise eine kugelförmige Gestalt.

Die sphärischen Siliconharzpartikel, insbesondere Polysilsesquioxanpartikel weisen vorzugsweise eine durchschnittliche Sphärizität y von mindestens 0,6, insbesondere mindestens 0,7 auf. Die sphärischen Polysilsesquioxanpartikel weisen vorzugsweise eine durchschnittliche Rundheit x von mindestens 0,6, insbesondere mindestens 0,7 auf. Die Rundheit x und Sphärizität y können nach DIN EN ISO 13503-2, Seite 37, Annex B.3, insbesondere Figur B.1 bestimmt werden.

Vorzugsweise werden alle Verfahrensschritte beim Druck der umgebenden Atmosphäre, also etwa 0,1 MPa (abs.) ausgeführt; sie können auch bei höheren oder niedrigeren Drücken durchgeführt werden. Bevorzugt sind Drücke von mindestens 0,08 MPa (abs.) und besonders bevorzugt mindestens 0,09 MPa (abs.), besonders bevorzugt höchstens 0,2 MPa (abs.), insbesondere höchstens 0,15 MPa (abs.).

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Siebanalyse:

Die Siebanalyse erfolgt mittels Trockensiebung an einer Analysensiebmaschine vom Typ Retsch AS 200 basic bei 100 % Amplitude. Für die Analyse werden vier Siebe nach DIN ISO 3310 folgender Maschenweite gestapelt: 200 µm, 100 µm, 40 µm, 20 µm, Boden. Es werden jeweils 50 g Substanz auf dem obersten Sieb (200 µm) aufgebracht und für 10 Minuten gesiebt.

### Volumengewichtete Partikelgrößenverteilung d₅₀

Die Bestimmung der volumengewichteten Partikelgrößenverteilung erfolgt nach ISO 13320 mittels statischer Laserstreuung mit dem Gerät Sympatec HELOS mit Trockendispergierer RODOS mit 2 bar Druckluft als Dispergiermedium. Der d₅₀ gibt dabei die mittlere Partikelgröße an.

### Messung des pH-Werts:

Ein elektrisches pH Meter mit Glaselektrode wird in die Reaktionsmischung getaucht.

### Beispiele

### Allgemeine Vorschrift 1: Herstellung von Polymethylsilsesquioxan-Partikeln

32 kg vollentsalztes Wasser mit Leitfähigkeit 0,1 µS/cm werden in einem emaillierten 50 Liter Rührkessel mit Mantelkühlung vorgelegt und auf 20 °C temperiert. Dabei wird mit 150 Upm gerührt. Der pH wird durch Zugabe von 0,1 molarer Salzsäure auf einen Wert von 4,40 eingestellt. 7,0 kg Methyltrimethoxysilan werden über 1 h zudosiert, dabei wird die Temperatur auf 20 °C gehalten. Nach Ende der Dosierung wird 30 Minuten bei 20 °C gerührt. (Schritt 1)

Der pH Wert wird korrigiert (Schritt 1a).

Nach Ende der Korrektur wird weitere 30 Minuten bei 20 °C gerührt. Es werden 363 g 0,5 molare methanolische KOH-Lösung innerhalb 1 min bei 20 °C zugegeben und insgesamt 3 min homogen vermischt (Schritt 2). Dann wird der Rührer abgestellt. Nach 21 h (Schritt 3) werden die ausgefallenen Partikel abfiltriert, mit VE-Wasser gewaschen und bei 150 °C 18 h getrocknet.

### Beispiel 1

Polymethylsilsesquioxan-Partikel wurden nach der Allgemeinen Vorschrift 1 hergestellt. Im Schritt 1a wurde der pH Wert auf 2,8 korrigiert. Die erhaltenen Partikel weisen eine mittlere Partikelgröße d50 von 5,0 µm auf.

### Beispiel 2

Die desagglomerierende Siebung der Partikel aus Beispiel 1 wurde mit einer Vibrationsrundsiebmaschine VRS 600 mit 35 kHz Ultraschallanregung des Siebgewebes (Maschenweite 20 µm, Siebdurchmesser 600 mm) der Firma Allgaier realisiert, erhältlich bei Allgaier Process Technology GmbH, Ulmer Straße 75, 73066 Uhingen, Deutschland, unter Einsatz von abriebfesten Hohlzylinder-Klopfhilfen. Der Grobgutauslauf wurde entfernt, um Verluste bei der Aufgabe des Produktes über den Auslauf zu vermeiden. 17 kg der Partikel aus Beispiel 1 wurden kontinuierlich auf das Sieb aufgetragen, sodass das Sieb stets mit Rohmaterial bedeckt blieb. Die Wurfhöhe der Partikel auf dem Siebgewebe betrug ca. 1 - 2 cm. Der mittlere Massendurchsatz betrug ca. 60 kg/h, entsprechend ca. 0,21 kg/h pro cm² Siebfläche. Es hat keine sichtbare Akkumulation von Grobgut auf dem Sieb stattgefunden. Es konnte ein vollständiger Materialdurchsatz und damit ein Feinanteil von 100% <20 µm erzielt werden.

### Vergleichsbeispiel V1

Die Partikel aus Beispiel 1 wurden mit einer herkömmlichen Wurfsiebmaschine Retsch AS 200 basic der Firma Retsch, erhältlich bei RETSCH GmbH, Retsch-Allee 1-5, 42781 Haan, Deutschland, ohne Grobgutauslauf über ein Sieb der Maschenweite 20 µm und Siebdurchmesser 200 mm gesiebt. 100 g der Partikel aus Beispiel 1 wurden aufgetragen und ohne zusätzliche Klopfhilfe mit einer Amplitude von 100 % (entsprechend ca. 2 mm Auslenkung) gesiebt. Nach 10 Minuten haben 44 g Partikel das Sieb passiert, entsprechend einem mittleren Massendurchsatz von ca. 0,009 kg/h pro cm² Siebfläche. Die Wurfsiebmaschine liefert nur 44% Feinanteil <20 µm. Es kann keine Auftrennung der agglomerierten Partikel erreicht werden.

### Vergleichsbeispiel V2

Die Partikel aus Beispiel 1 wurden wie in Vergleichsbeispiel V1 beschrieben gesiebt, jedoch mit Einsatz einer abriebfesten Hohlzylinder-Klopfhilfe. Nach 10 Minuten haben 52 g Partikel das Sieb passiert, entsprechend einem mittleren Massendurchsatz von ca. 0,01 kg/h pro cm² Siebfläche. Die Wurfsiebmaschine liefert auch mit Klopfhilfe nur 52% Feinanteil <20 µm. Es kann nur eine geringfügige Auftrennung der agglomerierten Partikel erreicht werden.

## Patentansprüche

1. Verfahren zur Herstellung sphärischer Siliconharzpartikel, bei dem Alkoxysilane mit Wasser zu einem Hydrolysat umgesetzt werden,
die entstandenen Siliconharzpartikel aus der Mischung isoliert werden,
die Siliconharzpartikel getrocknet werden und
die Partikel durch Ultraschallsiebung deagglomeriert werden.

2. Verfahren nach Anspruch 1, wobei bei der Ultraschallsiebung ein Siebgewebe mit 10 bis 40 µm Maschenweite eingesetzt wird.

3. Verfahren nach einem oder mehreren der voranstehenden Ansprüche, bei dem die Ultraschallsiebung im Frequenzbereich von 30 bis 38 kHz durchgeführt wird.

4. Verfahren nach einem oder mehreren der voranstehenden Ansprüche, bei dem bei der Ultraschallsiebung die durch die Ultraschallanregung resultierende Wurfhöhe der Partikel auf dem Siebgewebe 0,3 bis 10 cm beträgt.

5. Verfahren nach einem oder mehreren der voranstehenden Ansprüche, bei dem die Ultraschallsiebung mit einer flächenspezifischen Leistung von 10 bis 500 W/m² durchgeführt wird.

6. Verfahren nach einem oder mehreren der voranstehenden Ansprüche, bei dem die Partikel durch Abfiltrieren oder Zentrifugieren isoliert werden.

7. Verfahren zur Herstellung sphärischer
Polysilsesquioxanpartikel nach Anspruch 1, bei dem in einem ersten Schritt Trialkoxysilane der allgemeinen Formel (I)
RSi(OR¹)₃ (I),
in der
R einen Kohlenwasserstoffrest mit 1 bis 16 Kohlenstoffatomen dessen Kohlenstoffkette durch nicht benachbarte Gruppen -O-unterbrochen sein kann,
R¹ einen C₁- bis C₄-Alkylrest bedeuten,
mit angesäuertem Wasser mit einem pH-Wert von höchstens 6 unter Durchmischung zu einem Hydrolysat umgesetzt werden, in einem zweiten Schritt das Hydrolysat mit einer Lösung einer Base in Wasser oder C₁- bis C₄-Alkanol vermischt wird,
in einem dritten Schritt die Mischung mindestens 2 h aufbewahrt wird,
in einem vierten Schritt die Polysilsesquioxanpartikel aus der Mischung isoliert werden,
in einem fünften Schritt die Polysilsesquioxanpartikel getrocknet werden und
in einem sechsten Schritt die Partikel durch Ultraschallsiebung deagglomeriert werden.

8. Verfahren nach Anspruch 7, bei dem R Ethylrest oder Methylrest bedeutet.

9. Verfahren nach einem oder mehreren der Ansprüche 7 und 8, bei dem R¹ einen Ethylrest oder Methylrest bedeutet.

10. Verfahren nach einem oder mehreren der Ansprüche 7 bis 9, bei dem im ersten Schritt die Umsetzung zum Hydrolysat bei einem pH-Wert von 4,5 bis 2 erfolgt.

11. Verfahren nach einem oder mehreren der Ansprüche 7 bis 10, bei dem im zweiten Schritt eine Lösung von Alkalihydroxid in Wasser oder in einem Alkanol mit 1 bis 3 Kohlenstoffatomen eingesetzt wird.

## Claims

1. Process for preparing spherical silicone resin particles, in which alkoxysilanes are reacted with water to form a hydrolyzate,
the resulting silicone resin particles are isolated from the mixture,
the silicone resin particles are dried and
the particles are deagglomerated by ultrasonic sieving.

2. Process according to Claim 1, wherein a sieve mesh having a mesh size of 10 to 40 µm is used for the ultrasonic sieving.

3. Process according to one or more of the preceding claims, in which the ultrasonic sieving is carried out in a frequency range from 30 to 38 kHz.

4. Process according to one or more of the preceding claims, in which, in the ultrasonic sieving, the particles on the sieve mesh are thrown to a height of 0.3 to 10 cm as a result of the ultrasound excitation.

5. Process according to one or more of the preceding claims, in which the ultrasonic sieving is carried out at an area-specific power of 10 to 500 W/m².

6. Process according to one or more of the preceding claims, in which the particles are isolated by filtration or centrifugation.

7. Process for preparing spherical polysilsesquioxane particles according to Claim 1, in which in a first step trialkoxysilanes of general formula (I)
RSi(OR¹)₃ (I),
in which
R is a hydrocarbon radical having 1 to 16 carbon atoms, the carbon chain of which may be interrupted by non-adjacent -O- groups,
R¹ is a C₁- to C₄-alkyl radical,
are reacted with acidified water with a pH of at most 6 with mixing to form a hydrolyzate,
in a second step the hydrolyzate is mixed with a solution of a base in water or C₁- to C₄-alkanol,
in a third step the mixture is kept for at least 2 hours, in a fourth step the polysilsesquioxane particles are isolated from the mixture,
in a fifth step the polysilsesquioxane particles are dried and
in a sixth step the particles are deagglomerated by ultrasonic sieving.

8. Process according to Claim 7, in which R is an ethyl radical or methyl radical.

9. Process according to one or more of Claims 7 and 8, in which R¹ is an ethyl radical or methyl radical.

10. Process according to one or more of Claims 7 to 9, in which in the first step the reaction to form the hydrolyzate is carried out at a pH of 4.5 to 2.

11. Process according to one or more of Claims 7 to 10, in which in the second step a solution of alkali metal hydroxide in water or in an alkanol having 1 to 3 carbon atoms is used.

## Revendications

1. Procédé pour la préparation de particules sphériques de résine de silicone, dans lequel des alcoxysilanes sont transformés avec de l'eau en un hydrolysat,
les particules formées de résine de silicone sont isolées à partir du mélange,
les particules de résine de silicone sont séchées et les particules sont désagglomérées par tamisage par ultrasons.

2. Procédé selon la revendication 1, une toile filtrante présentant une largeur de maille de 10 à 40 µm étant utilisée lors du tamisage par ultrasons.

3. Procédé selon l'une ou plusieurs des revendications précédentes, dans lequel le tamisage par ultrasons est réalisé dans une plage de fréquences de 30 à 38 kHz.

4. Procédé selon l'une ou plusieurs des revendications précédentes, dans lequel, lors du tamisage par ultrasons, la hauteur de projection des particules sur la toile filtrante, résultant de l'excitation par les ultrasons, est de 0,3 à 10 cm.

5. Procédé selon l'une ou plusieurs des revendications précédentes, dans lequel le tamisage par ultrasons est réalisé à une puissance surfacique spécifique de 10 à 500 W/m².

6. Procédé selon l'une ou plusieurs des revendications précédentes, dans lequel les particules sont isolées par séparation par filtration ou par centrifugation.

7. Procédé pour la préparation de particules sphériques de polysilsesquioxane selon la revendication 1, dans lequel, dans une première étape, du trialcoxysilane de formule générale (I)
RSi(OR¹)₃ (I),
dans laquelle
R signifie un radical hydrocarboné comprenant 1 à 16 atomes de carbone dont la chaîne carbonée peut être interrompue par des groupes -O- non adjacents,
R¹ signifie un radical C₁-C₄-alkyle,
est transformé avec de l'eau acidifiée présentant un pH d'au plus 6, tout en mélangeant, en un hydrolysat,
dans une deuxième étape, l'hydrolysat est mélangé avec une solution d'une base dans de l'eau ou dans un C₁-C₄-alcanol,
dans une troisième étape, le mélange est conservé pendant au moins 2 h,
dans une quatrième étape, les particules de polysilsesquioxane sont isolées à partir du mélange, dans une cinquième étape, les particules de polysilsesquioxane sont séchées et
dans une sixième étape, les particules sont désagglomérées par tamisage par ultrasons.

8. Procédé selon la revendication 7, dans lequel R signifie un radical éthyle ou un radical méthyle.

9. Procédé selon l'une ou plusieurs des revendications 7 et 8, dans lequel R¹ représente un radical éthyle ou un radical méthyle.

10. Procédé selon l'une ou plusieurs des revendications 7 à 9, dans lequel, dans la première étape, la transformation en hydrolysat a lieu à un pH de 4,5 à 2.

11. Procédé selon l'une ou plusieurs des revendications 7 à 10, dans lequel on utilise, dans la deuxième étape, une solution d'hydroxyde de métal alcalin dans de l'eau ou dans un alcanol comprenant 1 à 3 atomes de carbone.
